# EUROPÄISCHE PATENTSCHRIFT

(11) **EP 1 312 501 B1**
(45) Veröffentlichungstag und Bekanntmachung des Hinweises auf die Patenterteilung: **03.10.2007**
(21) Anmeldenummer: 02022824.3
(22) Anmeldetag: 12.10.2002
(51) Int. Cl.: B60N 3/10, B60N 3/08, B60R 7/04

(54) **Anordnung von einem Behältnis und einem Becherhalter für ein Fortbewegungsmittel**
Arrangement of container and cupholder for means of locomotion
Agencement de récipient et porte-gobelet pour moyen de locomotion

(30) Priorität: 14.11.2001 DE 10155798
(43) Veröffentlichungstag der Anmeldung: 21.05.2003
(73) Patentinhaber: fischer automotive systems GmbH, 72160 Horb (DE)
(72) Erfinder: Schaal, Falk, 72275 Alpirsbach (DE)

(56) Entgegenhaltungen:
- EP-A- 0 593 169
- EP-A- 0 748 717
- DE-U- 9 420 164
- US-A- 2 325 721
- US-A- 4 927 108
- PATENT ABSTRACTS OF JAPAN vol. 1996, no. 04, 30. April 1996 (1996-04-30) -& JP 07 329626 A (KANTO AUTO WORKS LTD), 19. Dezember 1995 (1995-12-19)

## Beschreibung

Die Erfindung betrifft eine Einbaukombination für ein Fortbewegungsmittel, insbesondere für einen Kraftwagen, mit den Merkmalen des Oberbegriffs des Anspruchs 1 z.B. DE 94 20 164 U oder JP 07-329 626 A.

Die Einbaukombination umfasst ein oben offenes Behältnis, bspw. einen Aschenbecher oder ein Ablagefach, und ein Einstellelement mit einer Einstellöffnung für einen Getränkebehälter wie bspw. eine Getränkedose, einen Becher oder eine Tasse. Die Einbaukombination ist für einen horizontalen Einbau in bspw. einer Mittelkonsole eines Kraftwagens vorgesehen.

Es sind Halter für Getränkebehälter in unterschiedlichsten Konstruktionen und Ausführungsformen für verschiedene Anwendungsfälle bekannt. Außerdem sind Einbauaschenbecher für Kraftwagen in unterschiedlichsten Konstruktionen bekannt.

Der Erfindung liegt die Aufgabe zugrunde, ein oben offenes Behältnis wie bspw. einen Aschenbecher oder ein Ablagefach mit einem Halter oder Einstellelement für einen Getränkebehälter platzsparend zu kombinieren.

Diese Aufgabe wird erfindungsgemäß durch die Merkmale des Anspruchs 1 gelöst. Die erfindungsgemäße Einbaukombination weist eine Blende auf, die zu einer in etwa horizontalen Anordnung im Fortbewegungsmittel vorgesehen ist. Dabei handelt es sich bei der horizontalen Anordnung um eine vorgesehene Einbaulage. Die Blende kann Bestandteil, insbesondere eine Oberseite einer Mittelkonsole eines Kraftwagens sein. Die Blende weist eine Öffnung auf, deren Größe und Form in etwa derjenigen des oben offenen Behältnisses entspricht. Das Behältnis und das Einstellelement sind in der vorgesehenen Einbaulage der Einbaukombination unter der Blende angeordnet.

Desweiteren weist die erfindungsgemäße Einbaukombination eine Schiebeführung auf, die das Behältnis in etwa horizontal an einer Unterseite der Blende verschieblich führt. Das Behältnis ist unter die Öffnung der Blende schiebbar, so dass es von oben zugänglich ist. Und das Behältnis ist von der Öffnung der Blende wegverschiebbar, so dass es nicht zugänglich ist. Das Einstellelement und das Behältnis sind miteinander verbunden, so dass durch Verschieben des Behältnis das Einstellelement bewegt wird. Wird das Behältnis von der Öffnung der Blende wegverschoben, bewegt das Behältnis das mit ihm verbundene Einstellelement unter die Öffnung der Blende, so dass ein Getränkebehälter in die Einstellöffnung des Einstellelements einstellbar ist. Wird das Behältnis unter die Öffnung der Blende verschoben, bewegt das Behältnis das Einstellelement von der Öffnung der Blende weg. In diesem Fall ist nur das Behältnis zugänglich.

Die Erfindung hat den Vorteil, dass ein Behältnis und ein Einstellelement für einen Getränkebehälter platzsparend bspw. in einer Mittelkonsole eines Kraftwagens unterbringbar sind. Insbesondere lässt sich die Einbaukombination so unterbringen, dass sich das Behältnis, wenn es von der Öffnung der Blende wegverschoben ist, in Verlängerung vor der Mittelkonsole und unterhalb eines Armaturenbretts des Kraftwagens befindet. Dieser Raum ist ansonsten üblicherweise ungenutzt. Weitere Vorteile der Erfindung sind, dass sie eine wechselweise Benutzung des Behältnisses und des Einstellelements ermöglicht sowie eine konstruktiv einfacher Aufbau der Einbaukombination.

In bevorzugter Ausgestaltung der Erfindung ist das Einstellelement mittels eines Schwenkgelenks schwenkbar mit dem Behältnis verbunden, so dass das Einstellelement bei Nichtgebrauch nach unten schwenkbar ist. Auf diese Weise ist das Einstellelement bei Nichtgebrauch platzsparend unterbringbar.

Eine Ausgestaltung der Erfindung sieht ein blendenfestes Schwenkgelenk für das Einstellelement vor. Blendenfest bedeutet, dass sich das Schwenkgelenk in eingebautem Zustand der Einbaukombination in Bezug auf die Blende nicht verschiebt.

Um das Einstellelement bei Nichtgebrauch platzsparend unterzubringen sieht eine Ausgestaltung der Erfindung vor, dass Einstellelement mit mindestens zwei Teilen auszubilden, die mit einem Schwenkgelenk schwenkbar miteinander verbunden sind. Bei Nichtgebrauch lassen sich die beiden Teile des Einstellelements zusammenschwenken, was auch als knicken des Einstellelements bezeichnet werden kann.

Die Erfindung wird nachfolgend anhand in der Zeichnung dargestellter Ausführungsbeispiele näher erläutert. Es zeigen:
- Figuren 1a-c: ein erstes Ausführungsbeispiel einer Einbaukombination gemäß der Erfindung in drei unterschiedlichen Stellungen;
- Figuren 2a-c: die Einbaukombination aus Figuren 1a-c in einem Längsschnitt; und
- Figuren 3a-c: ein zweites Ausführungsbeispiel einer Einbaukombination gemäß der Erfindung in verschiedenen Stellungen.

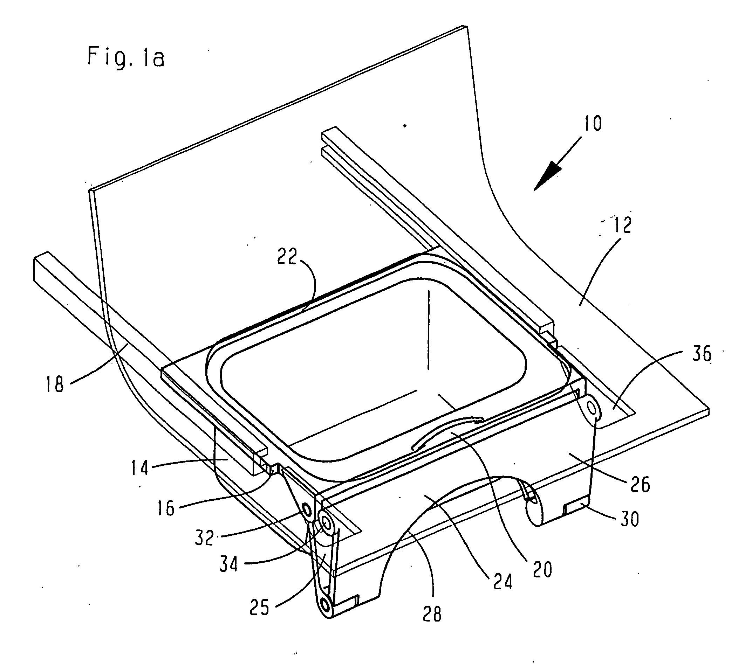

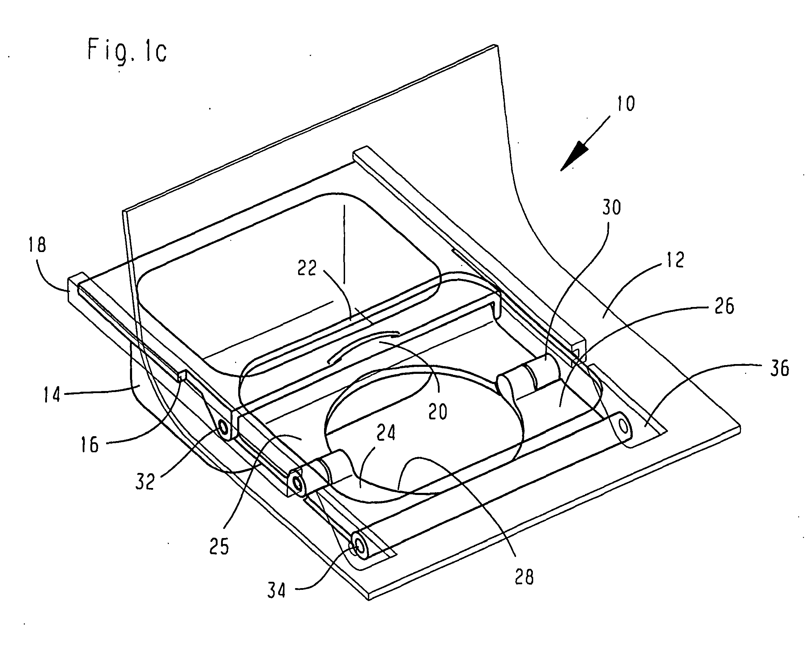

Die in Figur 1a dargestellte, erfindungsgemäße Einbaukombination 10 ist zum Einbau in bspw. eine Mittelkonsole eines nicht dargestellten Kraftwagens vorgesehen. Die Einbaukombination 10 weist eine plattenförmige Blende 12 auf, die in einer vorgesehenen Einbaulage horizontal angeordnet ist und in einem vorderen Bereich in einem Bogen schräg nach oben verläuft. Die Blende 12 kann Bestandteil einer im übrigen nicht dargestellten Mittelkonsole eines Kraftwagens nämlich eine Oberseite einer solchen Mittelkonsole sein. Sie geht im vorderen Bereich in einen Mittelteil eines Armaturenbretts über, das in einer Fahrzeugmittel bis zur Mittelkonsole heruntergezogen ist. Die Blende 12 ist in Figuren 1a-c gebrochen dargestellt um darunter befindliche Bauteile der Einbaukombination 10 sichtbar zu machen.

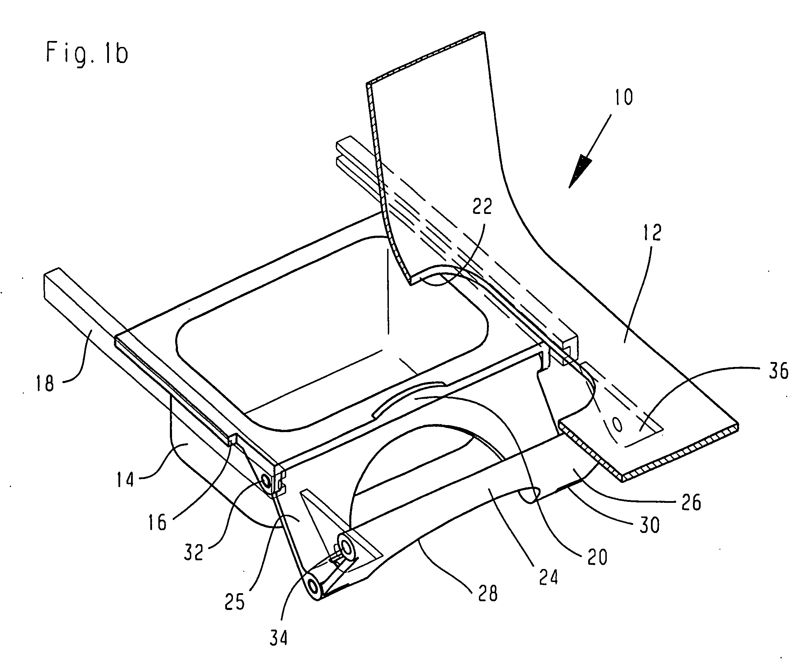

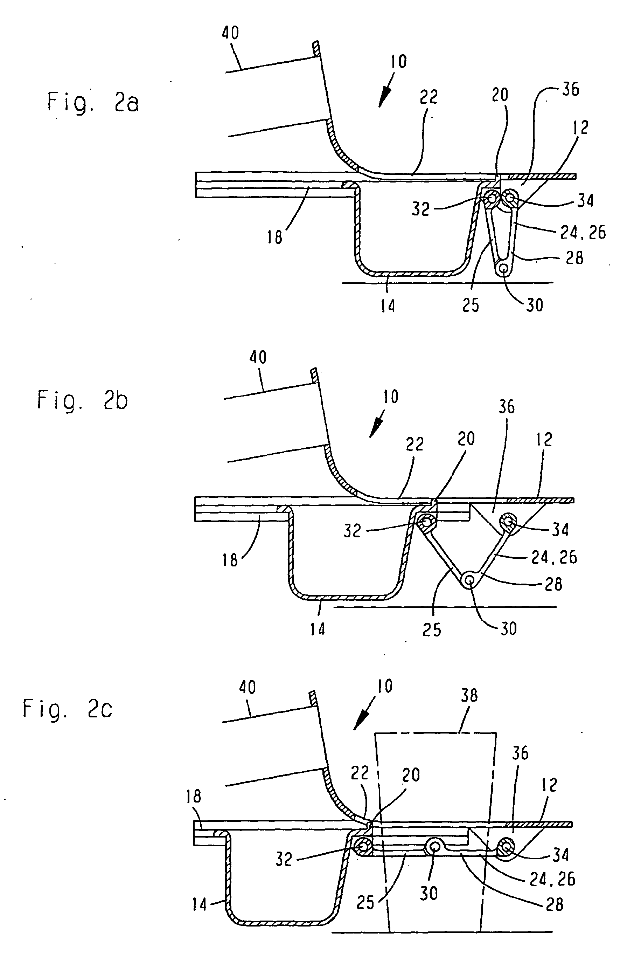

An einer Unterseite der Blende 12 ist ein oben offenes Behältnis, und zwar im dargestellten und beschriebenen Ausführungsbeispiel der Erfindung ein Aschenbecher 14 angeordnet. Der Aschenbecher 14 weist in Draufsicht eine rechteckige Form auf, an seiner Oberseite stehen leistenförmige Federn 16 seitlich ab, die in Führungsschienen 18 verschieblich aufgenommen sind. Die Führungsschienen 18 sind einstückig mit der Blende 12 und an deren Unterseite angeordnet, sie verlaufen parallel zueinander und in Längsrichtung. Die Führungsschienen 18 weisen einen C-förmigen Querschnitt auf, d.h. sie weisen eine in Längsrichtung durchgehende Nut an einander zugewandten Innenseiten auf, in der die Federn 16 des Aschenbechers 14 verschieblich aufgenommen sind. Die Führungsschienen 18 bilden mit den Federn 16 eine Schiebeführung für den Aschenbecher 14, mit der der Aschenbecher 14 in Längsrichtung verschiebbar an der Unterseite der Blende 12 geführt ist. Der Aschenbecher 14 lässt sich aus der in Figur 1a dargestellten Stellung über eine in Figur 1b dargestellte Zwischenstellung in die in Figur 1c dargestellte Stellung und zurück verschieben. Figuren 2a-c korrespondieren mit Figuren 1a-c, d.h. sie zeigen jeweils die gleiche Stellung des Aschenbechers 14. Zum Verschieben weist der Aschenbecher 14 eine nach oben stehende Rippe an seiner Oberseite als Griff 20 auf. Die Blende 12 ist mit einer rechteckigen Öffnung 22 versehen, durch die der Aschenbecher 14 in seiner nach hinten geschobenen, in Figuren 1a und 2a dargestellten Stellung zugänglich ist. In seiner nach vorn geschobenen, in Figuren 1c und 2c dargestellten Stellung ist der Aschenbecher 14 nicht zugänglich.

An einer Rückseite des Aschenbechers 14 ist ein Einstellelement 24 mit einer im dargestellten und beschriebenen Ausführungsbeispiel der Erfindung kreisrunden Einstellöffnung 28 für einen Getränkebehälter wie bspw. eine Getränkedose, eine Tasse oder einen Becher angeordnet. Das Einstellelement 24 weist in Figuren 1a-c und 2a-c zwei plattenförmige Teile 25, 26 auf, die durch ein Scharnier 30 schwenkbar miteinander verbunden sind. Ein vorderes Teil 25 des Einstellelements 24 ist mit einem Zapfenlager 32 auf jeder Seite des Aschenbechers 14 schwenkbar mit dem Aschenbecher 14 verbunden. Ein hinteres Teil 26 des Einstellelements 24 ist mit einem Zapfenlager 34 schwenkbar in Lagerböcken 36 gelagert, die einstückig mit der Blende 12 von deren Unterseite abstehen. Alle drei durch das Scharnier 30 und die Zapfenlager 32, 34 definierten Schwenkachsen sind parallel zueinander, horizontal und quer zur Schiebeführung 16, 18 des Aschenbechers 14 angeordnet.

Beim Verschieben des Aschenbechers 14 in die vordere, in Figuren 1c und 2c dargestellte Stellung gelangen die beiden Teile 25, 26 des Einstellelements 24 in eine horizontale Lage parallel unterhalb der Blende 12. Die Einstellöffnung 28 befindet sich unter der Öffnung 22 der Blende 12, so dass ein Getränkebehälter, wie bspw. der in Figur 2c mit Strichpunktlinien angedeutete Becher 38 in die Einstellöffnung 28 einstellbar ist. Wird der Aschenbecher 14 in seine hintere, in Figuren 1a und 2a dargestellte Stellung verschoben, knicken die beiden Teile 25, 26 des Einstellelements 24 am Schwenkgelenk 30 nach unten, so dass sie nahezu senkrecht hängend und damit platzsparend an einer Rückseite des Aschenbechers 14 untergebracht sind.

In seiner nach vorn geschobenen, in Figuren 1c und 2c dargestellten Stellung befindet sich der Aschenbecher 14 vor der Mittelkonsole des Kraftwagens unterhalb des Armaturenbretts. Der Aschenbecher 14 befindet sich unterhalb bspw. eines Einbauraums 40 für ein Autoradio oder dgl. also in einem Raum, der ansonsten üblicherweise ungenutzt ist.

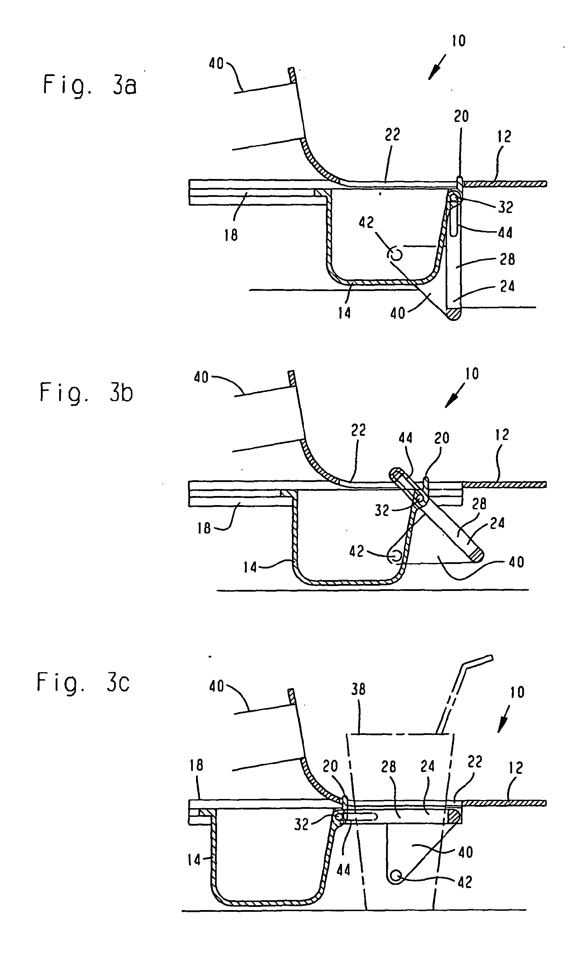

In Figuren 3a-c werden nachfolgend für mit Figuren 1a-c und 2a-c übereinstimmende Bauteile gleiche Bezugszahlen verwendet werden. Das Einstellelement 24 der Einbaukombination 10 aus Figuren 3a-c ist einstückig, es besteht aus einem plattenförmigen Teil mit rechteckigem Umriss und einer kreisrunden Einstellöffnung 28. Von dem plattenförmigen Einstellelement 24 stehen an beiden Seite in Seitenansicht dreiecksförmige Stützrippen 40 nach unten ab. Die Stützrippen 40 weisen Lagerzapfen 42 auf, die in Lagerlöchern an Seiten der im übrigen nicht dargestellten Mittelkonsole des Kraftwagens drehbar gelagert sind. An einem vorderen Ende ist das plattenförmige Einstellelement 24 mit Zapfenlagern 32 seitlich an der Rückseite des Aschenbechers 14 schwenkbar gelagert. Längsnuten 44 im Einstellelement 24 in denen Lagerzapfen der Zapfenlager 32 dreh- und verschiebbar einliegen ermöglichen eine begrenzte Verschiebbarkeit des Einstellelements 24 gegenüber dem Aschenbecher 14.

Mit Ausnahme des vorstehend beschriebenen Einstellelements 24 ist die in Figuren 3a-c dargestellte Einbaukombination 10 gleich ausgestaltet wie die in Figuren 1a-c und 2a-c dargestellte Einbaukombination 10 und funktioniert in gleicher Weise. Zur Vermeidung von Wiederholungen wird hinsichtlich Figuren 3a-c insoweit auf die oben stehenden Ausführungen zu Figuren 1a-c und 2a-c verwiesen.

Ist der Aschenbecher 14 der in Figuren 3a-c dargestellten Einbaukombination 10 wie in Figur 3a dargestellt nach hinten verschoben und dadurch durch die Öffnung 22 der Blende 12 zugänglich, so ist das Einstellelement 24 in eine in etwa vertikale Lage nach hinten unten an einer Rückseite des Aschenbechers 14 verschwenkt. Wird der Aschenbecher 14 nach vorn verschoben, bewegt er das Einstellelement 24 mit bis es sich unter der Öffnung 22 der Blende 12 befindet, wenn der Aschenbecher 14 wie in Figur 3c dargestellt vollständig nach vorn verschoben ist. In dieser Stellung ist ein Getränkebehälter wie bspw. der Becher 38 in die Einstellöffnung des Einstellelements 24 einstellbar.

## Patentansprüche

1. Einbaukombination (10) für ein Fortbewegungsmittel, mit einem oben offenen Behältnis (14) und mit einem Einstellelement (24) für einen Getränkebehälter, welches eine Einstellöffnung für den Getränkebehälter aufweist, **dadurch gekennzeichnet, dass** die Einbaukombination (10) eine Blende (12) aufweist, die zu einer in etwa horizontalen Anordnung im Fortbewegungsmittel vorgesehen ist, und die eine Öffnung (22) aufweist und unter der das Behältnis (14) und das Einstellelement (24) angeordnet sind, dass die Einbaukombination (10) eine Schiebeführung (16, 18) aufweist, die das Behältnis (14) in etwa horizontal an einer Unterseite der Blende (12) unter die Öffnung (22) der Blende (12) und von der Öffnung (22) der Blende- (12) weg verschieblich führt, und dass das Einstellelement (24) und das Behältnis (14) miteinander verbunden sind, so dass das Einstellelement (24) mit der Einstellöffnung (28) unter die Öffnung (22) der Blende (12) bewegt wird, wenn das Behältnis (14) von der Öffnung (22) der Blende (12) weg verschoben wird und so dass umgekehrt das Einstellelement (24) von der Öffnung (22) der Blende (12) wegbewegt wird wenn das Behältnis (14) unter die Öffnung (22) der Blende (12) verschoben wird.

2. Einbaukombination nach Anspruch 1, **dadurch gekennzeichnet, dass** das Einstellelement (24) mit einem Schwenkgelenk (32) schwenkbar mit dem Behältnis (14) verbunden ist.

3. Einbaukombination nach Anspruch 1, **dadurch gekennzeichnet, dass** die Einbaukombination (10) ein blendenfestes Schwenkgelenk (34; 42) aufweist, mit dem das Einstellelement (24) schwenkbar gelagert ist.

4. Einbaukombination nach Anspruch 1, **dadurch gekennzeichnet, dass** das Einstellelement (24) zwei Teile (25, 26) und ein Schwenkgelenk (30) aufweist, das die beiden Teile (25, 26) schwenkbar miteinander verbindet.

## Claims

1. Built-in combination (10) for use in a means of locomotion, having a receptacle (14) open at the top and having a receiving element (24) for a drinks container, which receiving element has an insertion opening for the drinks container, **characterised in that** the built-in combination (10) comprises a cover (12), which is intended for an approximately horizontal arrangement in the means of locomotion, and which has an opening (22) and beneath which the receptacle (14) and the receiving element (24) are arranged, **in that** the built-in combination (10) comprises a sliding guide (16, 18), which slidingly guides the receptacle (14) approximately horizontally on an underside of the cover (12) to beneath the opening (22) of the cover (12) and away from the opening (22) of the cover (12), and **in that** the receiving element (24) and the receptacle (14) are connected with one another so that the receiving element (24) is moved with its insertion opening (28) to beneath the opening (22) in the cover (12) when the receptacle (14) is displaced away from the opening (22) in the cover (12) and so that conversely the receiving element (24) is moved away from the opening (22) in the cover (12) when the receptacle (14) is displaced to beneath the opening (22) in the cover (12).

2. Built-in combination according to Claim 1, **characterised in that** the receiving element (24) is pivotally connected by means of a hinge (32) to the receptacle (14).

3. Built-in combination according to Claim 1, **characterised in that** the built-in combination (10) comprises a hinge (34; 42) fixed to the cover, by means of which hinge the receiving element (24) is pivotally mounted.

4. Built-in combination according to Claim 1, **characterised in that** the receiving element (24) comprises two parts (25, 26) and a hinge (30), which connects the two parts (25, 26) pivotally with one another.

## Revendications

1. Ensemble encastrable (10) pour un moyen de locomotion, comprenant un réceptacle (14) ouvert sur le dessus et un support (24) pour un contenant de boisson qui présente une ouverture de réception pour le contenant de boisson, **caractérisé en ce que** l'ensemble encastrable (10) présente un cache (12) qui est prévu pour une disposition approximativement horizontale à l'intérieur du moyen de locomotion et est doté d'une ouverture (22), et sous lequel sont disposés le réceptacle (14) et le support (24), **en ce que** l'ensemble encastrable (10) présente un guide coulissant (16, 18) qui guide le réceptacle (14) approximativement horizontalement sur une face inférieure du cache (12) pour le placer sous l'ouverture (22) du cache (12) et le retirer par coulissement de sous l'ouverture (22) du cache (12), et **en ce que** le support (24) et le réceptacle (14) sont reliés entre eux, de sorte que le support (24) comportant l'ouverture de réception (28) est déplacé sous l'ouverture (22) du cache (12) lorsque l'on retire par coulissement le réceptacle (14) de sous l'ouverture (22) du cache (12) et qu'à l'inverse, le support (24) est ôté de sous l'ouverture (22) du cache (12) lorsque le réceptacle (14) est déplacé sous l'ouverture (22) du cache (12).

2. Ensemble encastrable selon la revendication 1, **caractérisé en ce que** le support (24) est relié de façon pivotante au réceptacle (14) au moyen d'une articulation pivotante (32).

3. Ensemble encastrable selon la revendication 1, **caractérisé en ce que** l'ensemble encastrable (10) présente une articulation pivotante (32 ; 42) fixée au cache, au moyen de laquelle le support (24) est monté de façon pivotante.

4. Ensemble encastrable selon la revendication 1, **caractérisé en ce que** le support (24) présente deux parties (25, 26) et une articulation pivotante (30) qui relie de façon pivotante les deux parties (25, 26) entre elles.
